# EUROPEAN PATENT SPECIFICATION

(11) **EP 2 162 637 B1**
(45) Date of publication and mention of the grant of the patent: **11.01.2012**
(21) Application number: 08756572.7
(22) Date of filing: 30.05.2008
(51) Int. Cl.: F16H 7/06, B62M 9/00, B62M 9/06, F16G 1/28, F16G 5/20, F16H 7/02

(54) **RECIPROCATING BELT DRIVE**
HUBRIEMENANTRIEB
TRANSMISSION PAR COURROIE EN VA-ET-VIENT

(30) Priority: 31.05.2007 US 932444 P
(43) Date of publication of application: 17.03.2010
(73) Proprietor: Bronson, Henry D., Oak Brook, IL 60523 (US)
(72) Inventor: Bronson, Henry D., Oak Brook, IL 60523 (US)
(74) Representative: Grünecker, Kinkeldey, Stockmair & Schwanhäusser
(86) International application number: PCT/US2008/065423
(87) International publication number: WO 2008/151084

(56) References cited:
- EP-A1- 0 677 682
- WO-A1-2005/119087
- DE-A1- 10 119 495
- KR-B1- 930 007 669
- KR-Y1- 200 251 543
- US-A- 4 411 442
- US-A- 4 846 489
- US-A- 5 772 546
- US-B1- 6 334 838
- US-B1- 6 402 651

## Description

### CROSS-REFERENCE TO RELATED APPLICATIONS

The present application claims priority to U.S. Provisional Patent Application No. 60/932,444, filed on May 31 , 2007.

### BACKGROUND

Chain driven drive systems and other single speed torque transmission systems are well known and often utilized in many human powered applications. Known chain drive systems often include derailleur systems to provide for multiple chain and drive speeds. These known drive systems typically include multiple sprockets, one-way coaster axles and other hardware to couple with and control the torque transmitted via the drive chain. It would be desirable to provide a light and quiet drive system that may be utilized to transmit torque in, for example, a human powered application.

EP 0 677 682 A1 on which the preamble of claim 1 is based relates to a transmission with fixed transmission ratio, wherein a flexible belt transfers forces from a driving pulley to a driven pulley.

WO 2005/119087 A1 relates to a belt drive for an internal combustion engine.

US 4,846,489 discloses a bicycle in which a toothed belt transfers the power from a driving gear to a driven gear.

DE 101 19 495 A1 relates to a Citystepper in which reciprocating plates are coupled to a drive train via freewheel members.

US 6,334,838 B1 discloses an exercising cart structure in which pedals are coupled to a drive train via transmission gears.

US 4,411,442 discloses a foot powered wheeled vehicle in which pedals are connected to arclike pivotal connections driving pinion gears.

### SUMMARY

According to the present invention, it is suggested to provide a belt drive having the features of independent claim 1.

In one embodiment, a belt drive configured to cooperate with a drive mechanism is disclosed. The belt drive may include a drive belt pulley reciprocally coupled to the drive mechanism wherein the drive mechanism reciprocally translates between a power stroke and a return stroke, a driven pulley reciprocally coupled to the drive belt pulley via a drive belt wherein the drive belt includes a plurality of asymmetrical drive teeth configured to cooperate with a plurality of asymmetrical driven teeth disposed on the driven pulley, and an engagement mechanism disposed substantially adjacent to the drive belt and the driven pulley wherein the engagement mechanism is configured to cooperate with the drive belt during the power stroke, and wherein the drive belt substantially disengages the driven pulley during the return stroke.

In another embodiment, a belt drive system may be disclosed. The belt drive system may include a reciprocating drive mechanism having a drive belt pulley configured to provide a power stroke and a return stroke wherein the drive belt pulley includes a plurality asymmetric spoke teeth disposed about a circumference of the drive belt pulley, a driven pulley disposed away from the drive belt pulley wherein the driven pulley includes a plurality of asymmetrical driven teeth disposed thereon, and wherein each of the plurality of asymmetrical driven teeth includes a driven surface, a drive belt configured to releasably couple the drive belt pulley to the driven pulley as the drive mechanism reciprocates between the power stroke and the return stroke wherein the drive belt includes a plurality of asymmetrical drive teeth disposed thereon, and wherein each of the plurality of asymmetrical drive teeth includes a drive surface. The belt drive system may further include an engagement mechanism disposed substantially adjacent to the drive belt and the driven pulley wherein the engagement mechanism is configured to cooperate with the drive belt during the power stroke, and wherein the drive belt substantially disengages the driven pulley during the return stroke.

In another embodiment, a belt drive system may be disclosed. The belt drive system may include a drive belt pulley reciprocally coupled to a drive mechanism configured to translate between a power stroke and a return stroke, a drive belt fixedly coupled to the drive belt pulley, the drive belt including a plurality of asymmetrical drive teeth and wherein each of the plurality of asymmetrical drive teeth includes a drive surface arranged substantially perpendicular to a belt surface, and a driven pulley releasably coupled to the drive belt pulley via the drive belt, wherein the driven pulley includes a plurality of asymmetrical driven teeth and wherein each of the plurality of asymmetrical driven teeth may include a driven surface arranged to cooperate with the drive surface such that the drive belt cooperatively engages the driven pulley throughout the power stroke, and wherein the drive belt disengages from the driven pulley throughout the return stroke.

Other embodiments are disclosed, and each of the embodiments can be used alone or together In combination. Additional features and advantages of the disclosed embodiments are described In, and will be apparent from, the following Detailed Description and the figures.

### BRIEF DESCRIPTION OF THE FIGURES

FIG. 1 illustrates a perspective view of a version of a human powered scooter;

FIG. 2a illustrates a rear view of the version of FIG. 1;

FIG. 2b illustrates a top view of the version of FIG. 1;

FIG. 3a illustrates a mirrored isometric view of the version of FIG. 1 with the outer frame removed for clarity;

FIG. 3b illustrates a rear view of the embodiment of FIG. 1 with the outer frame removed for clarity;

FIG. 3c illustrates an exploded rear portion of the version of FIG. 1 with the outer frame removed for clarity,

FIG. 4 illustrates a perspective view of the outer frame of the version of FIG. 1;

FIG. 5 illustrates an embodiment of a human powered scooter utilizing a belt drive disclosed herein;

FIG. 6 illustrates a perspective view of an embodiment of a belt drive coupled to a driven wheel;

FIG. 7 illustrates a plan view of an embodiment of the belt drive shown in FIG. 6;

FIG. 8 Illustrates an enlarged plan view of an embodiment of the belt drive shown In FIG. 7:

FIG. 9 illustrates an embodiment of the belt drive shown throughout a power stroke; and

FIG. 10 illustrates an embodiment of the belt drive shown throughout a return stroke and when coasting.

### DETAILED DESCRIPTION

The belt drive and belt drive system disclosed and discussed herein provides a light and robust reciprocating drive mechanism configured to propel a human powered device such as a scooter or a bicycle. In the drawings, various embodiments of the invention and a version of a human powered scooter are depicted, and reference is made herein to scooters and bicycles with the majority of the description being given in relation to scooters. The many aspects described in the in the various embodiments and said version may equally apply to stepping machines and other machines or vehicles and although those described are usually provided as two wheeled vehicles, other wheel or non-wheel arrangements may apply.

It should be noted that the term "scooter" is generally used In the specification to describe a usually two-wheeled vehicle having a body portion on which a user may stand and an upstanding steering column with no seat or seat post. Again, alternative vehicles and applications are possible.

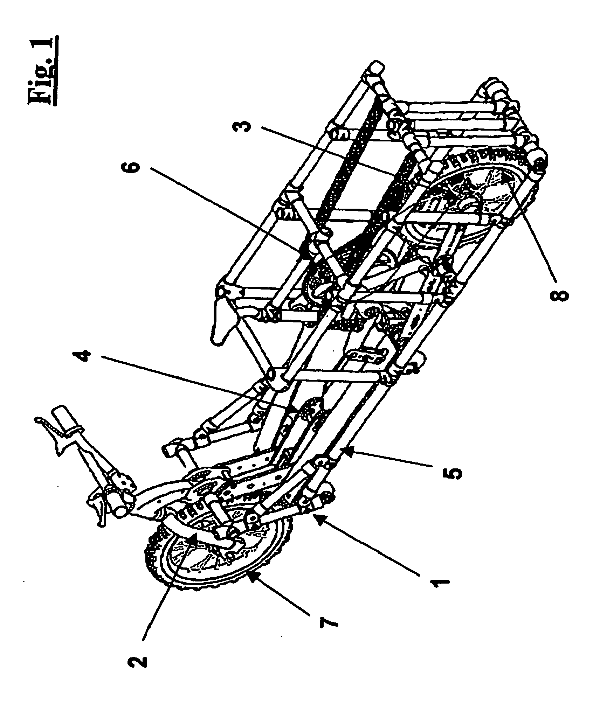

Referring first to FIG.1, a version of a human powered device in the form of a scooter 1 is shown. The scooter 1 includes a front wheel assembly 2, a rear wheel assembly 3, an inner frame 4 and an outer frame 5. Unlike conventional scoters that rely solely on pushing of the vehicle by the user, this scooter also incorporates an embodiment of a drive mechanism 6 which is constructed to drive the rear wheel 7 and the use the front wheel 8 for steering.

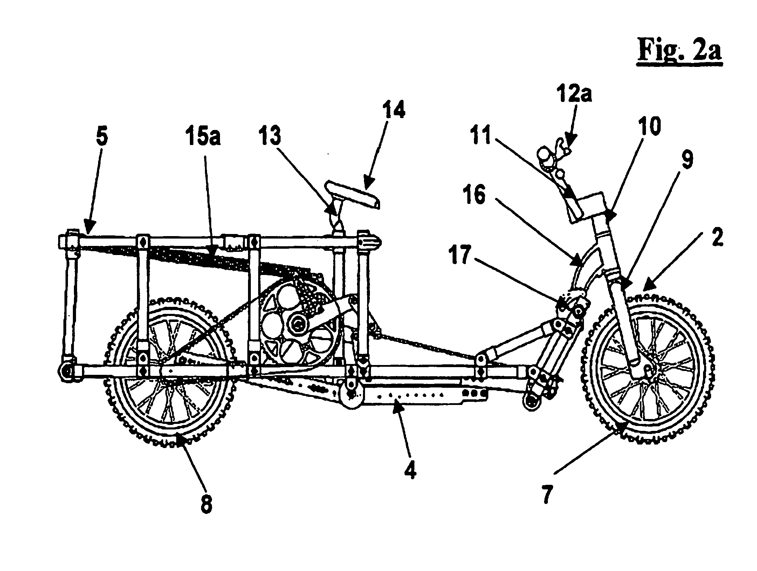

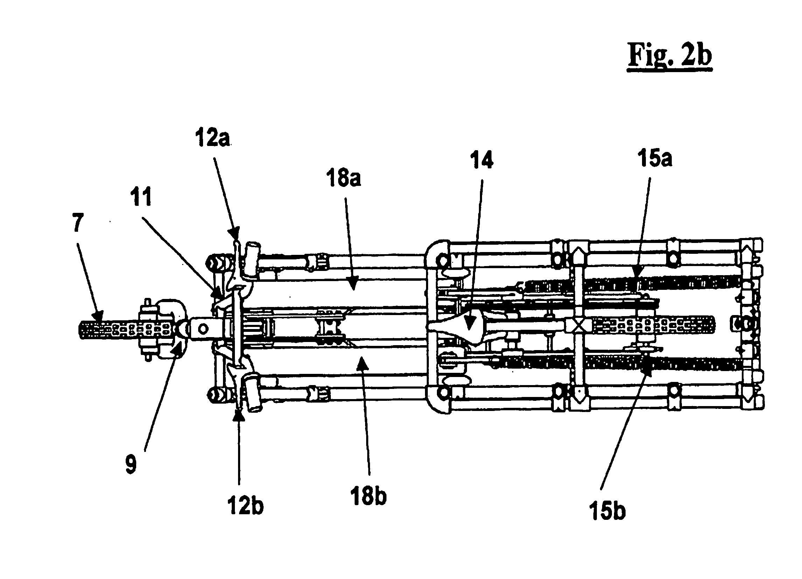

Referring to FIGS. 2a and 2b, the rear view and the top view of the above mentioned version are shown respectively. The front wheel assembly 2 includes a standard bicycle front wheel 7 mounted onto a front fork 9 in combination with a front braking attachment. The wheel 7 is connected to a steering column 10 having a handle bar 11 mounting right and left braking handles 12a and 12b. The invention also utilizes a pivoting head tube 16 and a steering column 10 along with a modified mounting plate 17, which is connected to the inner frame 4, for the optional pivoting and locking of one leg of the front fork 9 so that the front wheel 7 clears the ground sufficiently when moving the vehicle in a backward dolly mode. The outer frame 6 is also fitted with a seat post 13 and a seat 14 for optional seating arrangement at a specified position.

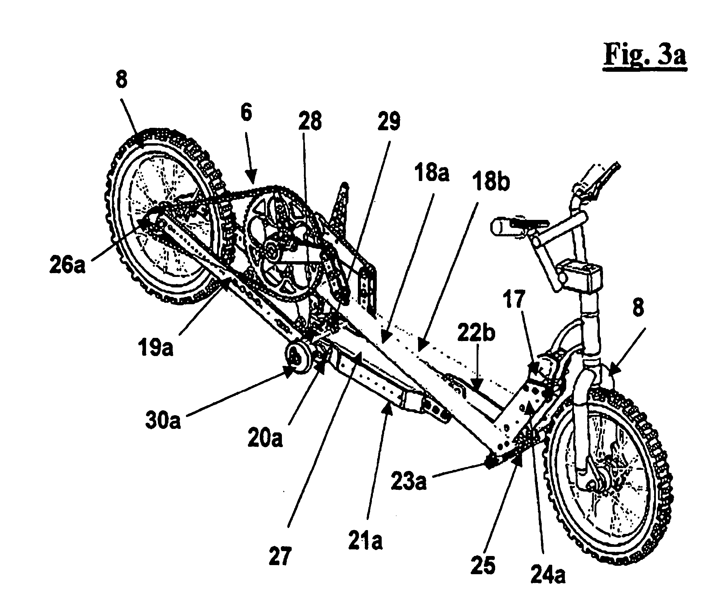

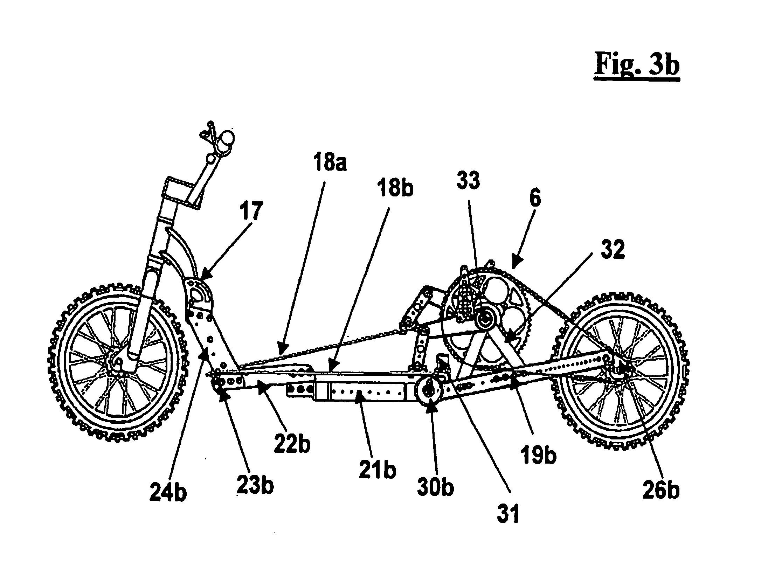

Referring to FIGS. 3a and 3b, the mirrored isometric view and the rear views of the above mentioned version, without the outer frame 4, are shown respectively. The inner frame assembly 4 includes a series of strategically positioned standard mounting plates 19a and 19b, 20a and 20b, 21 a and 21b, 22a and 22b, and 24a and 24b. These plates are mounted together to provide a sturdy structural link between the front wheel assembly 2 through the modified mounting plate 17, and the rear wheel assembly 3 through the wheel mounting plate 26a & 26b. The treadle pivoting shaft 25 Is positioned In between the Joints of the mounting plates of 22a/22b and 24a/24b. The standard pedals 23a and 23b are pivotally mounted on each side of treadle pivoting shaft 25. The treadles 18a and 18b are mounted on these pedals 23a and 23b to generate the pivoting motion at the toe end.

A central board 27 is placed over the top of the mounting plates 21 a & 21 b. The central board Incorporates a urethane bar 28 mounted across It using a mounting plate 29. This urethane bar acts as a stopper/cushioning pad for the treadles in the downward direction.

A pair of small wheels 30a and 30b are positioned on each end at the joint of the mounting plates 19a/19b and 21a/21b. The plates 20a and 20b are mounted In between them. These are used for the protection of the inner frame assembly 4 over uneven ground or stairs.

A tube gulding assembly 31 is attached in between the mounting plates 21 a and 21 b using standard "L" standoffs. This assembly guides the central tube attached to the outer frame 5 on which the seat post 13 Is mounted.

A triangular shaped trimmed bicycle frame 32 is attached in between the mounting plates 19a & 19b, which supports and carries the front crankshaft 33.

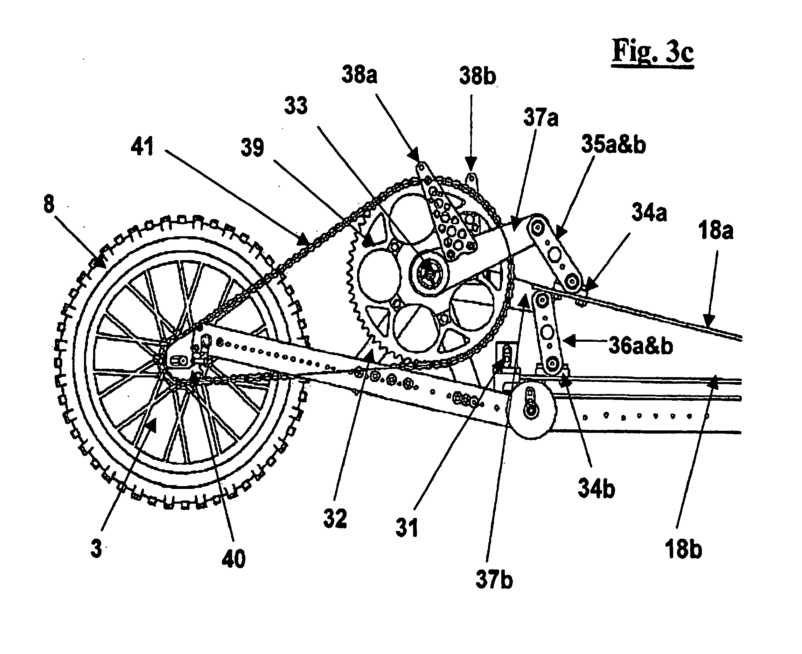

Referring now to FIG.3c, the front view of the driving mechanism 6 of the above mentioned version is shown. The pair of right and left treadles 18a and 18b are pivotally attached to the inner frame assembly 4 in the toe end on the treadle pivoting shaft 25, through standard right and left pedals 23a and 23b. On the heel end, the treadles 18a and 18b are connected to a pair of left and right common sprag-type one-way clutch devices known as Power Cranks. These are shown at 37a and 37b. The Power Cranks are attached via a pair of double swivel linkages 35a and 35b, and 36a and 35b, through hubs 34a and 34b mounted on the respective treadles. These power cranks 37a and 37b effectively de-link the treadles 18a and 18b from each other, which makes them work independently. The front sprocket 39 is attached to one of the Power Cranks, for example the right Power Crank 37a. The pair of Power Cranks 37a and 37b assemblies are in turn mounted on a front crankshaft 33 which is held in position by a triangular shaped trimmed bicycle frame 32 attached to the inner frame assembly 4.

The independent reciprocating motion of the treadles 18a and 18b is transmitted to the front crankshaft 33 as rotary motion through the Power Cranks 37a and 37b. This rotary motion in turn is transmitted to the front sprocket 39, which in turn transmits this rotary driving motion to the rear wheel 8 through a continuous chain 41 and a rear sprocket 40 mounted on the rear wheel 8.

Referring again to FIGS. 2a and 2b, it can be seen that in addition to the above-mentioned linkage system a second connection point may be added by attaching a pair of crank arms 38a & 38b perpendicularly to the respective Power Cranks 37a and 37b. This allows for the connection of a pair of springs 15a and 15b respectively which serves to automatically return the treadles 18a and 18b to a raised heel position when they are not weighted.

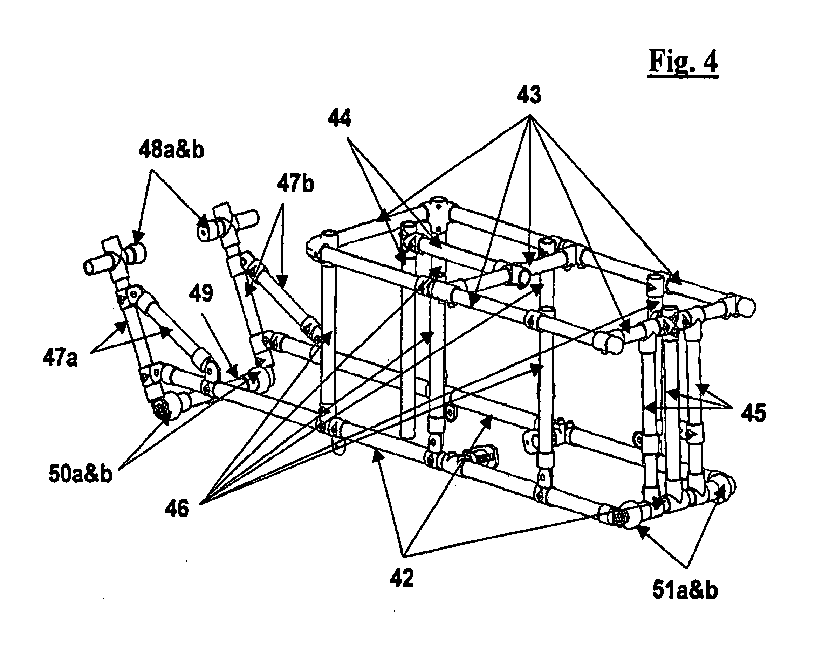

Referring now to FIG.4, a perspective view of the outer frame 6 of the above mentioned version is shown. The frame includes a plurality of horizontally placed aluminum tubes forming the bottom 42 and the top 43 parts of the frame. The frame also includes a set of vertically placed aluminum tubes forming the vertical part 46 and the rear part 45 of the frame, thereby connecting the bottom and top parts 42 and 43. A set of perpendicularly connected tubes 44 are attached to the middle tube of the top part 43 to form the locating position for the seat post 13. A pair of "Y"shaped tube connections 47a and 47b along with the front central tube 49 make up the front part of the outer frame assembly 6. The tubes 47a and 47b, and a set of cross tubes 48a and 48b support the modified mounting plate 17 supporting the pivoting head 16.

The front central tube 49 supports a pair of small wheels 50a & 50b at each end which are used as a dolly for vehicle support when the front wheel is pivoted forward into a folded position for compact storage and movement.

Similarly the rear tube of the bottom part 42 also supports a pair of small wheels 51a and 51b at each end which are used to assist the vehicle movement when the vehicle is standing vertically on its back end.

Other particular aspects of the scooter of FIG. 1 may be Implemented as follows:

1. The front wheel assembly can Incorporate standard bicycle components such as a bicycle front wheel mounted to a front fork with a front braking attachment, connected to a steering column with a handle bar containing front and back braking handles mounted on it. The rear wheel assembly can include a bicycle rear wheel mounted with a rear sprocket.

The outer frame can comprise a series of aluminum pipes connected together using multiple pipe joints to form a skeleton frame to house the inner frame and to serve as attachment points for various extra equipment such carry-on and dolly pack. Of course, alternative materials and connection methods for the tubing or other structures may be used.

The small wheels mounted on the frame allow for transportation In different positions.

The return stroke of the pedals may be provided by a pair of springs connecting the perpendicular crank arms attached to the power cranks and the outer frame.

In another version the vehicle may include longer or multiple treadles along with larger frames to accommodate longer wheel base for multiple user or tandem use.

The vehicle may also be fitted with battery power to assist the user by supplying partial driving force for exhausting tasks like moving uphill via an electronic regulator. The batteries in such a device may be charged during cruise and downhill situation

The vehicle may also be fitted with a wireframe basket on top to carry loads or goods for street hawking or transporting; a canopy to provide shelter from sun and rain; or a wind shield pivotally on the same mounting shaft as the treadles to provide shelter from wind and rain during motion.

A belt or harness may be provided to support flexible lines connected to the vehicle to allow the user to apply motive force to the treadles larger than the user's weight.

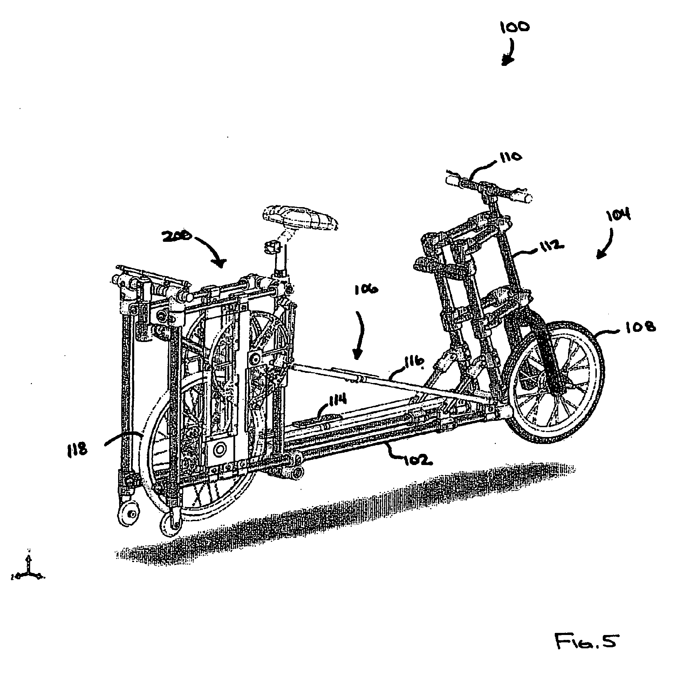

Thus, this version of a scooter may be utilized with the above drive mechanism, variations, accessories or other drive arrangements which convert substantially rectilinear motions to circular motions of the cranks and the rear wheels. Such drive mechanisms will be discussed further below with respect to FIGS. 5 et seq.

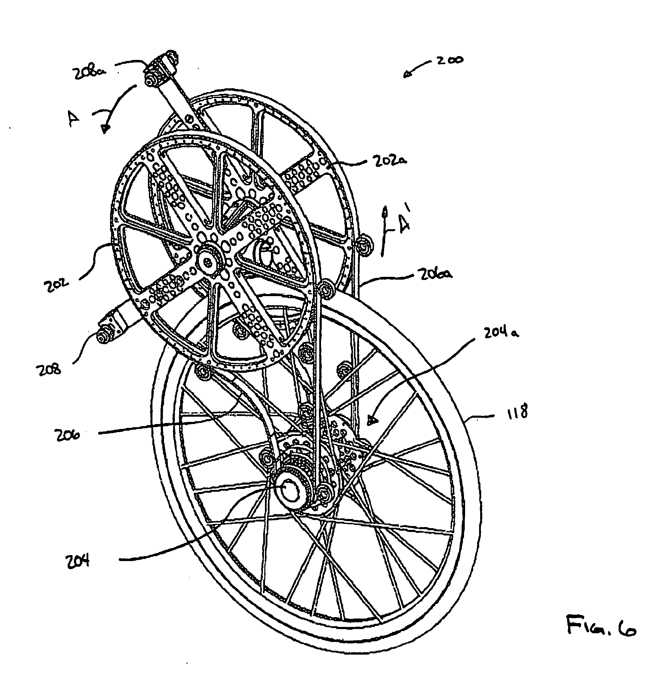

FIG. 5 illustrates a first embodiment of a human powered device 100. In this exemplary embodiment, the human powered device 100 is configured as a scooter having a frame 102 supporting: a steering assembly 104; a reciprocating drive mechanism; and a belt drive 200 (see FIG. 6). The steering assembly 104 includes a steerable wheel 108 coupled to a handle bar 110 via a steering column 112. The reciprocating drive mechanism 108 includes a first drive pedal 114 and a second drive pedal 118 coupled to the belt drive 200. The belt drive 200 may, in turn, couple to and drive a driven wheel 118 to thereby propel the human powered device 100.

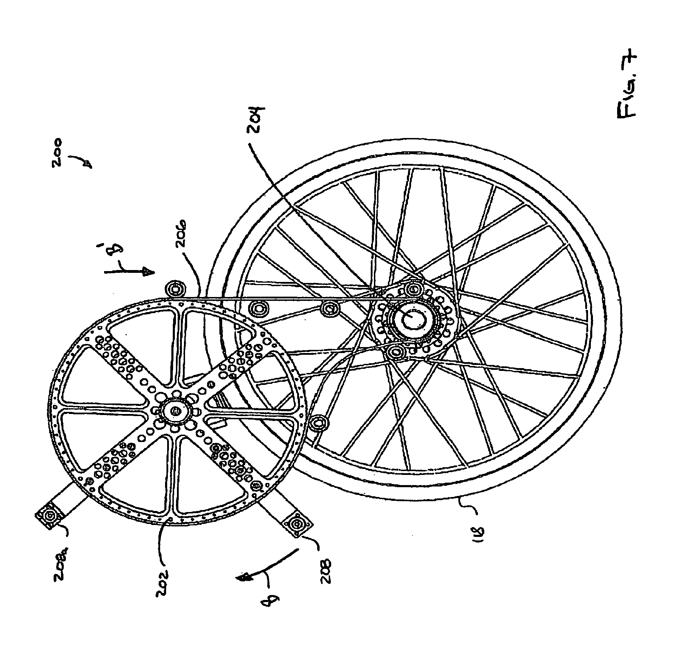

FIGS. 6 and 7 illustrate perspective and plan views, respectively, of the belt drive 200 coupled to the driven wheel 118. The belt drive 200, in this exemplary embodiment, includes a pair of drive belt pulleys 202, 202a coupled to a driven pulley 204, 204a of the driven wheel 118 via drive belts 208, 208a, The drive belts 206, 208a may be endless molded belts of thermo-set polyurethane and/or other elastomeric material configured to encase a reinforcing layer or portion of threads centered along the belt pitch line. For example, the reinforcing threads may be Keviar® or any other aramid thread, steel wire or mesh and/or polyester threads. The drive belts 206, 206a may be manufactured via, for example, a spin casting or Centrifugal Rubber Mold Casting (CRMC) process that utilizes centrifugal force to produce castings from a rubber mold. Each of the drive belt pulleys 202, 202a includes a drive lever 208, 208a. The drive levers 208, 208a, in turn, may be coupled to the first and second drive pedals 114, 116.

In operation, the drive lever 208 may be coupled to the first drive pedal 114, and the drive lever 208a may be coupled to the second drive pedal 116. The physical position of the drive levers 208, 208a on the drive belt pulleys 202, 202a may be selected to ensure that each drive belt pulley 202, 202a rotates reciprocally with respect to the remaining drive belt pulley in response to the movement of the attached first and second drive pedals 114, 116. In other words, in response to the substantially linear movement of the attached first and second drive pedals 114, 116, one drive belt pulleys 202 may rotate in a clockwise direction with respect to the other drive belt pulley 202a which may rotate in a counter-clockwise direction. Thus, as the drive lever 208a translates down throughout a power stroke, the drive belt pulley 202a rotates in the direction indicated by the arrow A (see FIG. 6). The drive belt 206a releasably engages the driven pulley 204a and translates in the direction indicated by the arrow A' (see FIG. 6). Similarly, as the drive lever 208 translates upward throughout a return stroke, the drive belt pulley 202 rotates in the direction indicated by the arrow B (see FIG. 7). The drive belt 206, in turn, disengages from the driven pulley 204 and translates in the direction indicated by the arrow B' (see FIG. 7). The drive belts 206, 206a may be fixedly and/or permanently secured to their respective drive belt pulleys 202, 202a such that only a portion of the belt may be utilized during each power or recovery stroke. The drive belts 206, 206a may be periodically adjusted to prevent excess wear at the point of cooperation with the driven pulley 204.

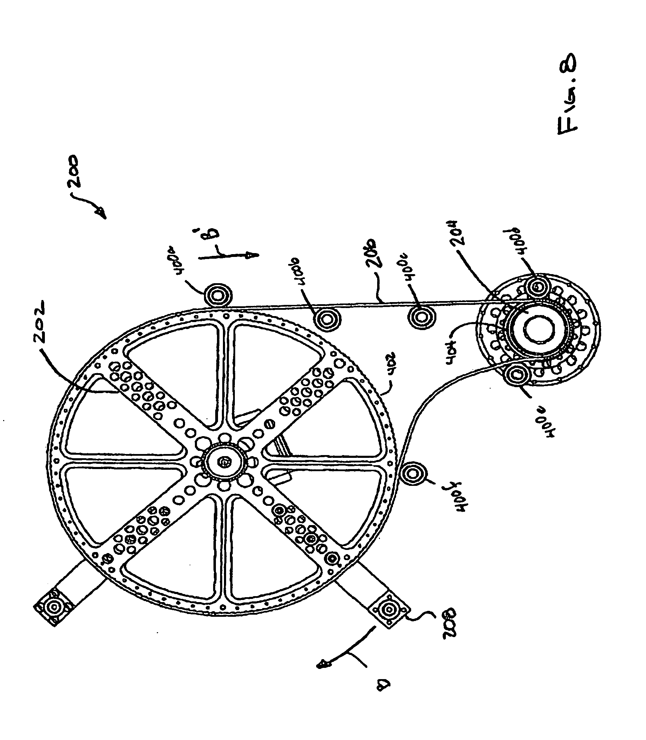

FIG. 8 illustrates an enlarged plan view of the belt drive 200. In particular, half of the belt drive 200 including the drive belt pulley 202, the driven pulley 204 and the drive belt 206 are visible and illustrated in FIG. 8. A plurality of idlers 400a to 400f may be positioned adjacent to the drive belt 206 to ensure adherence to the intended drive belt path.

The drive belt pulley 202 may include a plurality of asymmetrical teeth 402 disposed or formed about the circumference. In one embodiment, the drive belt pulley 202 may have a diameter of 10.565" and a circumference of 33.1908". The driven pulley 204 may similarly include a plurality of asymmetrical teeth 404 disposed or formed about the circumference. In one embodiment, the driven pulley may have a diameter of 1.784" and a circumference of 5.6046". In one embodiment, the drive belt pulley 202 may include one-hundred sixty-eight (168) of asymmetrical teeth 402 and the driven pulley 204 may include twenty-nine (29) of asymmetrical teeth 404 resulting in a drive ratio of 5.793 to 1. Thus, the length or pitch between each of the asymmetrical teeth 404 may be calculated to be 0.193" based on the exemplary measurements and sizes discussed and disclosed herein.

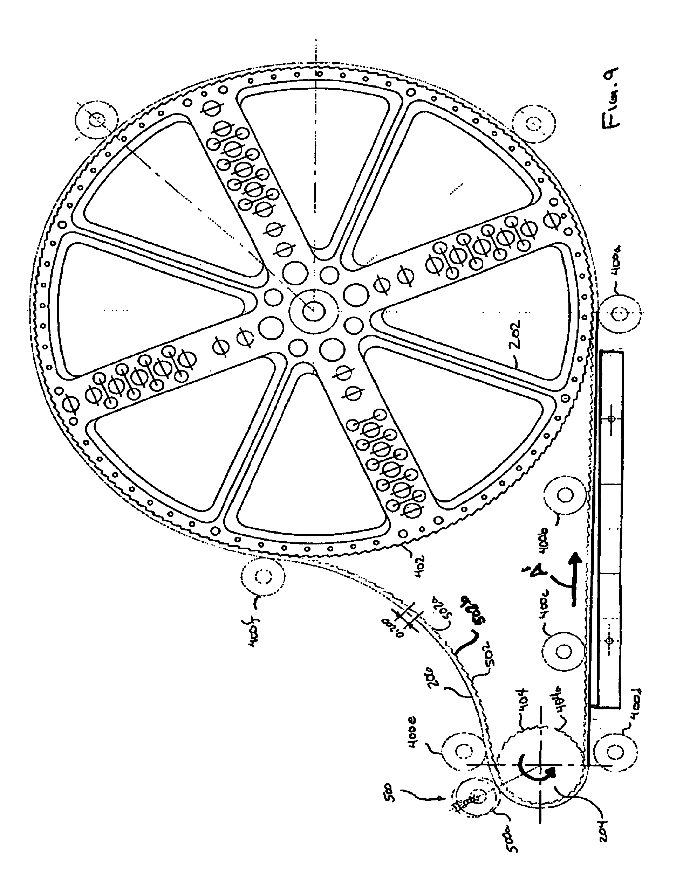

FIG. 9 illustrates an enlarged plan view of the belt drive 200 during a power stroke of the drive mechanism 106 (see FIG. 5). In this exemplary embodiment, the drive belt 206 includes a plurality of asymmetrical teeth 502 sized to engage, in a complementary and releasable manner, the asymmetrical teeth 402, 404 provided on the drive belt pulley 202 and driven pulley 204, respectively. Each of the asymmetrical teeth 502 of the drive belt 206 may have a 0.200" length or pitch that includes a ratchet surface 502b and a drive surface 502a height of 0.050". The difference in length or pitch (0.007) between the driven pulley 204 and the drive belt 206 may provide a complimentary fit between the distorted (due to bending) asymmetrical teeth 502 of the drive belt and the asymmetrical teeth 404 of the driven pulley 204. Moreover, the drive surface 502a may be formed or manufactured at approximately a 100 degree included angle. The resulting asymmetrical teeth 502a may provide saw-tooth or ratchet-like structure suitable for engaging, driving and disengaging the driven pulley 204 as the drive sprocket 202 cycles between the power stroke and the return stroke.

The driven pulley 204, as previously discussed, may include the plurality of asymmetrical teeth 404 formed to compliment the asymmetrical teeth 502. Similar to the drive surface 502a, a drive surface 404a of the driven pulley 204 may be formed or manufactured at approximately a 100 degree included angle. Given the size, e.g., twenty-nine (29) teeth, of the driven pulley 204 relative to the size and configuration of the asymmetrical teeth 404, the 100 degree include angle at which the drive surface 404a is formed is substantially radial relative to the center of the driven pulley 204. This relative configuration between the asymmetrical teeth 404 and the asymmetrical teeth 504, ensures that the drive surfaces 404a and 502a ensure cooperate and/or mate during the power stroke of the drive belt pulley 202 and release from each other during the return stroke. Moreover, if, during operation, the driven pulley 204 is rotating too fast, for example, when the human powered device 100 is coasting downhill, the tooth configuration of driven pulley 204 ratchets the belt drive 206 away from the asymmetrical teeth 404 thereby preventing engagement and/or wear of the belt.

An engagement mechanism 500 may be configured to releasably and controllably engage the drive belt 206 during a power stroke. For example, the engagement mechanism may include a solenoid configured to shift an idler 500a into contact with the surface of the drive belt 206. The idler 500a, in turn, brings the drive belt 206 into contact with the driven pulley 204. In particular, the idler 500a brings the drive surface 502a portion of the asymmetrical teeth 502 into contact with the drive surface 404a portion of the asymmetrical teeth 404. Thus, during a power stroke, the engagement mechanism 500 may compel the drive belt 206 to cooperate with, and transmit torque to, to the driven pulley 204. For example, during the power stroke, the transmitted torque creates tension in the drive belt 206 which when cooperating with the engagement mechanism 500 causes the asymmetrical teeth 502 to engage and maintain engagement with the asymmetrical teeth 404 of the driven pulley. In alternate embodiments, the engagement mechanism may be a cam driven mechanism, a spring driven mechanism and/or an electro-mechanical switch. Furthermore, alternate structures may be used to urge the belt towards the driven pulley, such as a finger or block slidable along a slot or track.

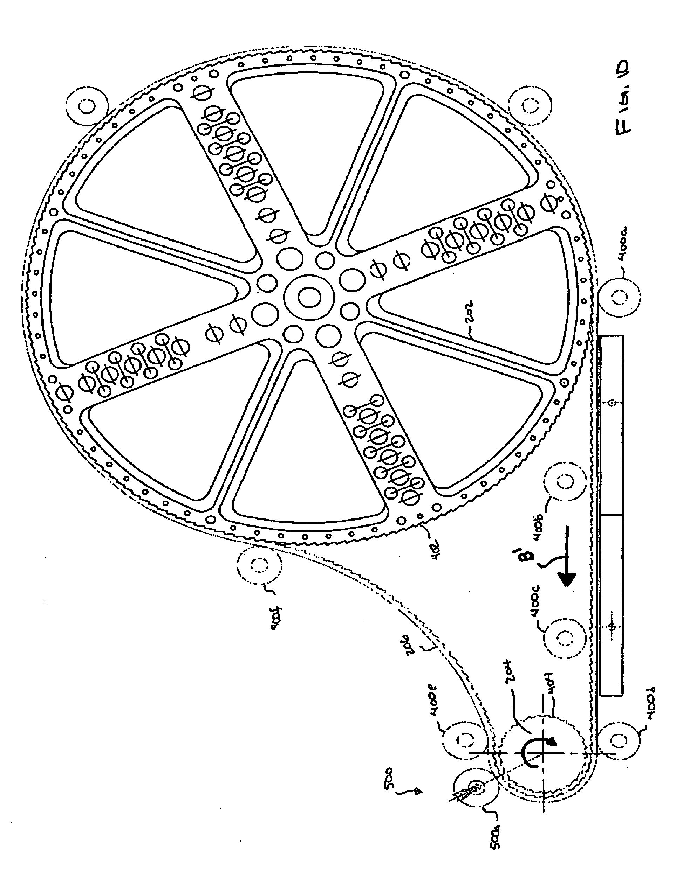

FIG. 10 illustrates an enlarged plan view of the belt drive 200 during a return stroke of the drive mechanism 106 (see FIG. 5). Alternatively, FIG. 10 may also illustrated the belt drive in a coasting configuration. The coasting configuration may occur when the driven pulley 204 is rotating too quickly for the drive belt 206 to engage. In this embodiment, the engagement mechanism 500 is disengaged, e.g., is in a retracted position, to allow the drive belt 206 to move substantially freely relatively to the driven pulley 204. In particular, the idler 500a releases the drive belt 206 from contact with the driven pulley 204. The drive belt 206, will, in one embodiment elastically deform or return to its disengagement radius or configuration. As the drive belt 206 elastically returns to its original, e.g., pre-power stroke and engagement, shape, the drive surface 502a portion of the asymmetrical teeth 502 separates from the complimentary drive surface 404a portion of the asymmetrical teeth 404 of the driven pulley 204. Thus, during a return stroke, the drive belt 206 may rotate and/or linearly translate relative to the driven pulley 204 without transmitting torque thereto. The idlers 400a to 400f ensure that the drive belt 206 remains substantially contained near the intended drive path, e.g., around the drive belt pulley 202 and the driven pulley 204.

While the discussion herein has focused on the movement of the drive belt pulley 202 and the drive belt 206, it will be understood that the drive belt pulley 202a and the drive belt 206a (see FIG. 6) may be configured to operate in a reciprocal manner. For example, while the drive belt pulley 202a and the drive belt 206a are transmitting torque to the driven pulley 204 during the power stroke, the drive belt pulley 202 and the drive belt 206 may be moving freely relative to the driven pulley 204 during a return stroke. The drive belt pulley 202a and the drive belt 206a may, upon completion of the power stroke, begin a return stroke while the drive belt pulley 202 and the drive belt 206 may begin a power stroke.

It should be understood that various changes and modifications to the presently preferred embodiments described herein will be apparent to those skilled in the art. Such changes and modifications can be made without departing from the scope of the present invention as defined by the appended claims.

## Claims

1. A belt drive (200) configured to cooperate with a drive mechanism (106) translating between a power stroke and a return stroke, the belt drive comprising:
a drive belt pulley (202, 202a) which is configured to be coupled to the drive mechanism (106);
a driven pulley (204, 204a) coupled to the drive belt pulley (202, 202a) via a drive belt (206, 206a), wherein the drive belt (206, 206a) includes a plurality of asymmetrical drive teeth (502) configured to cooperate with a plurality of asymmetrical driven teeth (404) disposed on the driven pulley (204, 204a); and
an engagement mechanism (500) disposed substantially adjacent to the drive belt and the driven pulley, wherein the engagement mechanism (500) is configured to cooperate with the drive belt (206, 206a) to initiate the power stroke, and
**characterized in that** the drive belt (206, 206a) substantially disengages the driven pulley (204, 204a) during the return stroke.

2. The belt drive of claim 1, wherein the return stroke includes a coasting configuration.

3. The belt drive of claim 1 or 2, wherein the drive belt pulley (202, 202a) comprises a plurality of asymmetrical spoke teeth (402) configured to cooperate with the plurality of plurality of asymmetrical driven teeth (404).

4. The belt drive of one of the preceding claims, wherein the drive belt pulley (202, 202a) and the driven pulley (204, 204a) are sized to define approximately a 5.8 to 1 drive ratio.

5. The belt drive of one of the preceding claims, wherein drive belt (206, 206a) is an elastomeric drive belt.

6. The belt drive of claim 5, wherein the elastomeric drive belt includes a reinforcement portion selected from the group consisting of: aramid fibers; steel thread; and polyester thread.

7. The belt drive of one of the preceding claims, wherein each of the plurality of asymmetric drive teeth (502) includes a drive surface (502a) arranged substantially perpendicular to the surface of the drive belt (206, 206a), and wherein each of the plurality of driven teeth (404) includes a driven surface (404a) configured to engage a corresponding drive surface (502a).

8. The belt drive of one of the preceding claims, wherein the engagement mechanism (500) is selected from the group consisting of: a solenoid-driven mechanism, an electro-mechanical switch, and a cam driven mechanism.

9. The belt drive according to claim 1, further comprising:
a reciprocating drive mechanism (106), the drive mechanism including the drive belt pulley (202, 202a) configured to provide a power stroke and a return stroke, wherein the drive belt pulley (202, 202a) includes a plurality asymmetric spoke teeth (402) disposed about a circumference of the drive belt pulley (202, 202a);
wherein the driven pulley (204, 204a) is disposed away from the drive belt pulley (202, 202a), and wherein each of the plurality of asymmetrical driven teeth (404) of the driven pulley (204, 204a) includes a driven surface (404a);
a drive belt (206, 206a) configured to releasably couple the drive belt pulley (202, 202a) to the driven pulley (204, 204a) as the drive mechanism (106) transitions between the power stroke and the return stroke, wherein the drive belt (206, 206a) includes said plurality of asymmetrical drive teeth (502) disposed thereon, and wherein each of the plurality of asymmetrical drive teeth (502) includes a drive surface (502a).

10. The belt drive of claim 9, wherein the return stroke includes a coasting configuration.

11. The belt drive of claim 9 or 10, wherein the drive belt pulley (202, 202a) is fixedly coupled to the drive belt (206, 206a) in at least a single location.

12. The belt drive of one of claims 9 to 11, wherein the drive belt pulley (202, 202a) and the driven pulley (204, 204a) are sized to define approximately a 5.8 to 1 drive ratio.

13. The belt drive of one of claims 9 to 12, wherein drive belt (206, 206a) is an elastomeric drive belt.

14. The belt drive of claim 13, wherein the elastomeric drive belt includes a reinforcement portion selected from the group consisting of: aramid fibers; steel thread; and polyester thread.

15. The belt drive of one of claims 9 to 14, wherein the engagement mechanism (500) is selected from the group consisting of: a solenoid-driven mechanism, an electro-mechanical switch, and a cam driven mechanism.

16. The belt drive of claim 1, wherein the drive belt pulley (202, 202a) is configured to be reciprocally coupled to a drive mechanism (106);
the belt drive further comprising a drive belt (206, 206a) fixedly coupled to the drive belt pulley (202, 202a), the drive belt (206, 206a) including said plurality of asymmetrical drive teeth (502) and wherein each of the plurality of asymmetrical drive teeth includes a drive surface (502a) arranged substantially perpendicular to a belt surface; and
wherein the driven pulley (204, 204a) is releasably coupled to the drive belt pulley (202, 202a) via the drive belt (206, 206a), wherein each of the plurality of asymmetrical driven teeth (404) of the driven pulley (204, 204a) includes a driven surface (404a) arranged to cooperate with the drive surface (502a);
wherein the drive belt (206, 206a) cooperatively engages the driven pulley (204, 204a) throughout the power stroke, and wherein the drive belt (206, 206a) disengages from the driven pulley (204, 204a) throughout the return stroke.

17. The belt drive of claim 16, wherein the return stroke includes a coasting configuration.

18. The belt drive of claim 16 or 17, wherein the drive belt pulley (202, 202a) and the driven pulley (204, 204a) are sized to define approximately a 5.8 to 1 drive ratio.

19. The belt drive of one of claims 16 to 18, wherein drive belt (206, 206a) is an elastomeric drive belt multilayered drive belt.

20. The belt drive of claim 19, wherein the elastomeric drive belt includes a reinforcement portion selected from the group consisting of: aramid fibers; steel thread; and polyester thread.

## Patentansprüche

1. Riemenantrieb (200), der dazu eingerichtet ist mit einem Antriebsmechanismus (106) zusammenzuwirken, der zwischen einem Arbeitshub und einem Rücklaufhub wechselt, wobei der Riemenantrieb enthält:
eine Antriebsriemenscheibe (202, 202a), die dazu eingerichtet ist, mit dem Antriebsmechanismus (106) gekoppelt zu werden;
eine angetriebene Riemenscheibe (204, 204a), die mit der Antriebsriemenscheibe (202, 202a) über einen Antriebsriemen (206, 206a) gekoppelt ist, wobei der Antriebsriemen (206, 206a) eine Vielzahl asymmetrischer Antriebszähne (502) enthält, die dazu eingerichtet sind, mit einer Vielzahl asymmetrischer angetriebener Zähne (404) zusammenzuwirken, die auf der angetriebenen Riemenscheibe (204, 204a) angeordnet sind; und
einen Eingreifmechanismus (500), der im wesentlichen benachbart des Antriebsriemens und benachbart der angetriebenen Riemenscheibe angeordnet ist, wobei der Eingreifmechanismus (500) dazu eingerichtet ist, mit dem Antriebsriemen (206, 206a) zusammenzuwirken, um einen Arbeitshub zu initiieren, und
**dadurch gekennzeichnet, dass** der Antriebsriemen (206, 206a) im wesentlichen die angetriebene Riemenscheibe (204, 204a) während des Rücklaufhubes löst.

2. Riemenantrieb nach Anspruch 1, bei dem der Rücklaufhub leerlaufend ist.

3. Riemenantrieb nach Anspruch 1 oder 2, bei dem die Antriebsriemenscheibe (202, 202a) eine Vielzahl asymmetrischer Speichenradzähne (402) enthält, die dazu eingerichtet sind, mit der Vielzahl asymmetrischer angetriebener Zähne (404) zusammenzuwirken.

4. Riemenantrieb nach einem der vorhergehenden Ansprüche, bei dem die Antriebsriemenscheibe (202, 202a) und die angetriebene Riemenscheibe (204, 204a) derart bemessen sind, dass sie ein Übersetzungsverhältnis von etwa 5,8 zu 1 bilden.

5. Riemenantrieb nach einem der vorhergehenden Ansprüche, bei dem der Antriebsriemen (206, 206a) ein Elastomer-Antriebsriemen ist.

6. Riemenantrieb nach Anspruch 5, bei dem der Elastomer-Antriebsriemen einen Armierungsanteil enthält, der aus der Gruppe gewählt ist, die aus Aramidfasern, Stahlfäden und Polyesterfäden besteht.

7. Riemenantrieb nach einem der vorhergehenden Ansprüche, bei dem jeder aus der Vielzahl asymmetrischer Antriebszähne (502) eine Antriebsfläche (502a) enthält, die im wesentlichen senkrecht zu der Oberfläche des Antriebsriemens (206, 206a) angeordnet ist, und jeder aus der Vielzahl der angetriebenen Zähne (404) eine angetriebene Oberfläche (404a) enthält, die dazu eingerichtet ist, mit einer entsprechenden Antriebsfläche (502a) in Eingriff zu stehen.

8. Riemenantrieb nach einem der vorhergehenden Ansprüche, bei dem der Eingreifmechanismus (500) aus der Gruppe gewählt ist, die aus einem solenoidgetriebenen Mechanismus, einem elektromechanischen Schalter und einem nockengetriebenen Mechanismus besteht.

9. Riemenantrieb nach Anspruch 1, weiterhin enthaltend:
einen Hubantriebsmechanismus (106), wobei der Antriebsmechanismus die Antriebsriemenscheibe (202, 202a) enthält, die dazu eingerichtet ist, einen Arbeitshub und einen Rücklaufhub zu erzeugen, wobei die Antriebsriemenscheibe (202, 202a) eine Vielzahl asymmetrischer Speichenradzähne (402) enthält, die um einen Umfang der Antriebsriemenscheibe (202, 202a) angeordnet sind;
wobei die angetriebene Riemenscheibe (204, 204a) von der Antriebsriemenscheibe (202, 202a) entfernt angeordnet ist und jeder aus der Vielzahl asymmetrischer angetriebener Zähne (404) der angetriebenen Riemenscheibe (204, 204a) eine angetriebene Oberfläche (404a) enthält;
einen Antriebsriemen (206, 206a), der dazu eingerichtet ist, die Antriebsriemenscheibe (202, 202a) mit der angetriebenen Riemenscheibe (204, 204a) lösbar zu koppeln, wenn der Antriebsmechanismus (106) zwischen dem Antriebshub und dem Rücklaufhub wechselt, wobei der Antriebsriemen (206, 206a) die Vielzahl asymmetrischer Antriebszähne (502) enthält, die auf ihm angeordnet sind, und jeder aus der Vielzahl asymmetrischer Antriebszähne (502) eine Antriebsfläche (502a) enthält.

10. Riemenantrieb nach Anspruch 9, bei dem der Rücklaufhub leerlaufend ist.

11. Riemenantrieb nach Anspruch 9 oder 10, bei dem die Riemenantriebsscheibe (202, 202a) mit dem Antriebsriemen (206, 206a) an wenigstens einer einzigen Stelle fest verbunden ist.

12. Riemenantrieb nach einem der Ansprüche 9 bis 11, bei dem die Riemenantriebsscheibe (202, 202a) und die angetriebene Riemenscheibe (204, 204a) derart bemessen sind, dass sie ein Übersetzungsverhältnis von etwa 5,8 zu 1 bilden.

13. Riemenantrieb nach einem der Ansprüche 9 bis 12, bei dem der Antriebsriemen (206, 206a) ein Elastomer-Antriebsriemen ist.

14. Riemenantrieb nach Anspruch 13, bei dem der Elastomer-Antriebsriemen einen Armierungsanteil enthält, der aus der Gruppe gewählt ist, die aus Aramidfasern, Stahlfäden und Polyesterfäden besteht.

15. Riemenantrieb nach einem der Ansprüche 9 bis 14, bei dem der Eingreifmechanismus (500) aus der Gruppe gewählt ist, die aus einem solenoidgetriebenen Mechanismus, einem elektromechanischen Schalter und einem nockengetriebenen Mechanismus besteht.

16. Riemenantrieb nach Anspruch 1, bei dem die Riemenantriebsscheibe (202, 202a) dazu eingerichtet ist, hubartig mit einem Antriebsmechanismus (106) gekoppelt zu sein;
wobei der Riemenantrieb weiterhin einen Antriebsriemen (206, 206a) enthält, der mit der Antriebsriemenscheibe (202, 202a) fest gekoppelt ist, der Antriebsriemen (206, 206a) die Vielzahl asymmetrischer Antriebszähne (502) enthält und jeder aus der Vielzahl asymmetrischer Antriebszähne eine Antriebsfläche (502a) enthält, die im wesentlichen senkrecht zu einer Riemenoberfläche angeordnet ist, und
die angetriebene Riemenscheibe (204, 204a) mit der Antriebsriemenscheibe (202, 202a) über den Antriebsriemen (206, 206a) lösbar gekoppelt ist und jeder aus der Vielzahl asymmetrischer angetriebener Zähne (404) der angetriebenen Riemenscheibe (204, 204a) eine angetriebene Oberfläche (404a) enthält, die dazu eingerichtet ist, mit der Antriebsfläche (502a) zusammenzuwirken,
wobei der Antriebsriemen (206, 206a) mit der angetriebenen Riemenscheibe (204, 204a) während des Antriebshubes zusammenwirkend in Eingriff steht und der Antriebsriemen (206, 206a) von der angetriebenen Riemenscheibe (204, 204a) während des Rücklaufhubes gelöst ist.

17. Riemenantrieb nach Anspruch 16, bei dem der Rücklaufhub leerlaufend ist.

18. Riemenantrieb nach Anspruch 16 oder 17, bei dem die Riemenantriebsscheibe (202, 202a) und die angetriebene Riemenscheibe (204, 204a) so bemessen sind, dass sie ein Übersetzungsverhältnis von etwa 5,8 zu 1 bilden.

19. Riemenantrieb nach einem der Ansprüche 16 bis 18, bei dem der Antriebsriemen (206, 206a) ein mehrlagiger Elastomer-Antriebsriemen ist.

20. Riemenantrieb nach Anspruch 19, bei dem der Elastomer-Antriebsriemen einen Armierungsanteil enthält, der aus der Gruppe gewählt ist, die aus Aramidfasern, Stahlfäden und Polyesterfäden besteht.

## Revendications

1. Transmission par courroie (200) configurée pour coopérer avec un mécanisme d'entraînement (106) effectuant une transition entre une course motrice et une course de retour, la transmission par courroie comprenant :
une poulie à courroie d'entraînement (202, 202a) qui est configurée pour être reliée au mécanisme d'entraînement (106);
une poulie menée (204, 204e) couplée à la poulie à courroie d'entraînement (202, 202a) par l'intermédiaire d'une courroie d'entraînement (206, 206a), dans laquelle la courroie d'entraînement (206, 206a) comporte plusieurs dents d'entraînement asymétriques (502) configurées pour coopérer avec plusieurs dents menées asymétriques (404) disposées sur la poulie menée (204, 204a) ; et
un mécanisme de mise en prise (500) disposé de façon sensiblement adjacente à la courroie d'entraînement et à la poulie menée, dans lequel le mécanisme de mise en prise (500) est configuré pour coopérer avec la courroie d'entraînement (206, 206a) pour amorcer la course motrice, et
**caractérisée en ce que** la courroie d'entraînement (206, 206a) désengage sensiblement la poulie menée (204, 204a) pendant la course de retour.

2. Transmission par courroie selon la revendication 1, dans laquelle la course de retour comporte une configuration à avance libre.

3. Transmission par courroie selon la revendication 1 ou 2, dans laquelle la poulie à courroie d'entraînement (202, 202a) comprend plusieurs dents asymétriques à rayons (402) configurées pour coopérer avec les dents menées asymétriques (404).

4. Transmission par courroie selon l'une des revendications précédentes, dans laquelle la poulie à courroie d'entraînement (202, 202a) et la poulie menée (204, 204a) sont dimensionnées pour définir approximativement un rapport d'entraînement de 5,8 à 1.

5. Transmission par courroie selon l'une des revendications précédentes, dans laquelle la courroie d'entraînement (206, 206a) est une courroie d'entraînement en élastomère.

6. Transmission par courroie selon la revendication 5, dans laquelle la courroie d'entraînement en élastomère comporte une partie de renfort sélectionnée à partir du groupe constitué par : des fibres d'aramide ; un fil d'acier ; et un fil de polyester.

7. Transmission par courroie selon l'une des revendications précédentes, dans laquelle chacune des dents d'entraînement asymétriques (502) comporte une surface d'entraînement (502a) agencée de façon sensiblement perpendiculaire à la surface de la courroie d'entraînement (206, 206a), et dans laquelle chacune des dents menées (404) comporte une surface menée (404a) configurée pour mettre en prise une surface d'entraînement correspondante (502a).

8. Transmission par courroie selon l'une des revendications précédentes, dans laquelle le mécanisme de mise en prise (500) est sélectionné à partir du groupe constitué par : un mécanisme entraîné par solénoïde, un commutateur électromécanique, et un mécanisme entraîné par came.

9. Transmission par courroie selon la revendication 1, comprenant en outre :
un mécanisme d'entraînement à va et vient (106), le mécanisme d'entraînement comportant la poulie à courroie d'entraînement (202, 202a) configurée pour fournir une course motrice et une course de retour, dans laquelle la poulie à courroie d'entraînement (202, 202a) comporte plusieurs dents asymétriques à rayons (402) disposées autour d'une circonférence de la poulie à courroie d'entraînement (202, 202a) ;
dans laquelle la poulie menée (204, 204a) est disposée loin de la poulie à courroie d'entraînement (202, 202a), et dans laquelle chacune des dents menées asymétriques (404) de la poulie menée (204, 204a) comporte une surface menée (404a) ;
une courroie d'entraînement (206, 206a), configurée pour coupler de façon amovible la poulie à courroie d'entraînement (202, 202a) à la poulie menée (204, 204a) en tant que mécanisme d'entraînement (106), effectue une transition entre la course motrice et la course de retour, dans laquelle la courroie d'entraînement (206, 206a) comporte lesdites dents d'entraînement asymétriques (502) disposées dessus, et dans laquelle chacune des dents d'entraînement asymétriques (502) comporte une surface d'entraînement (502a).

10. Transmission par courroie selon la revendication 9, dans laquelle la course de retour comporte une configuration à avance libre.

11. Transmission par courroie selon la revendication 9 ou 10, dans laquelle la poulie à courroie d'entraînement (202, 202a) est couplée de manière fixe à la courroie d'entraînement (206, 206a) dans au moins un emplacement simple.

12. Transmission par courroie selon l'une des revendications 9 à 11, dans laquelle la poulie à courroie d'entraînement (202, 202a) et la poulie menée (204, 204a) sont dimensionnées pour définir approximativement un rapport d'entraînement de 5,8 à 1.

13. Transmission par courroie selon l'une des revendications 9 à 12, dans laquelle la courroie d'entraînement (206, 206a) est une courroie d'entraînement en élastomère.

14. Transmission par courroie selon la revendication 13, dans laquelle la courroie d'entraînement en élastomère comporte une partie de renfort sélectionnée à partir du groupe constitué par : des fibres d'aramide ; un fil d'acier ; et un fil de polyester.

15. Transmission par courroie selon l'une des revendications 9 à 14, dans laquelle le mécanisme de mise en prise (500) est sélectionné à partir du groupe constitué par : un mécanisme entraîné par solénoïde, un commutateur électromécanique et un mécanisme entraîné par came.

16. Transmission par courroie selon la revendication 1, dans laquelle la poulie à courroie d'entraînement (202, 202a) est configurée pour être couplée à un mécanisme d'entraînement (106) à va et vient;
la transmission par courroie comprenant en outre une courroie d'entraînement (206, 206a) couplée de manière fixe à la poulie à courroie d'entraînement (202, 202a), la courroie d'entraînement (206, 206a) comportant lesdites dents d'entraînement asymétriques (502) et dans laquelle chacune des dents d'entraînement asymétriques comporte une surface d'entraînement (502a) agencée de façon sensiblement perpendiculaire à une surface de courroie ; et
dans laquelle la poulie menée (204, 204a) est couplée de façon amovible à la poulie à courroie d'entraînement (202, 202a) par l'intermédiaire de la courroie d'entraînement (206, 206a), dans laquelle chacune des dents menées asymétriques (404) de la poulie menée (204, 204a) comporte une surface menée (404a) agencée pour coopérer avec la surface d'entraînement (502a) ;
dans laquelle la courroie d'entraînement (206, 206a) met en prise de façon coopérative la poulie menée (204, 204a) tout au long de la course motrice, et dans laquelle la courroie d'entraînement (206, 206a) se désengage de la poulie menée (204, 204a) tout au long de la course de retour.

17. Transmission par courroie selon la revendication 16, dans laquelle la course de retour comporte une configuration à avance libre.

18. Transmission par courroie selon la revendication 16 ou 17, dans laquelle la poulie à courroie d'entraînement (202, 202a) et la poulie menée (204, 204a) sont dimensionnées pour définir approximativement un rapport d'entraînement de 5,8 à 1.

19. Transmission par courroie selon l'une des revendications 16 à 18, dans laquelle la courroie d'entraînement (206, 206a) est une courroie d'entraînement en élastomère à plusieurs couches.

20. Transmission par courroie selon la revendication 19, dans laquelle la courroie d'entraînement en élastomère comporte une partie de renfort sélectionnée à partir du groupe constitué par : des fibres d'aramide ; un fil d'acier ; et un fil de polyester.
